# EUROPEAN PATENT SPECIFICATION

(11) **EP 0 654 325 B1**
(45) Date of publication and mention of the grant of the patent: **02.12.1998**
(21) Application number: 94917157.3
(22) Date of filing: 06.06.1994
(51) Int. Cl.: B25J 9/06, B25J 9/04, B25J 19/00, B25J 9/10

(54) **INDUSTRIAL ROBOT**
INDUSTRIEROBOTER
ROBOT INDUSTRIEL

(30) Priority: 08.06.1993 JP 164291/93
(43) Date of publication of application: 24.05.1995
(73) Proprietor: KABUSHIKI KAISHA YASKAWA DENKI SEISAKUSHO, Kitakyushu-shi, Fukuoka 806 (JP)
(72) Inventor: OOKURA, Masahiko, Kabushiki Kaisha Yaskawa Denki, Kitakyushu-shi, Fukuoka 806 (JP); SHIRAKI, Tomoyuki, Kabushiki Kaisha Yaskawa Denki, Kitakyushu-shi, Fukuoka 806 (JP); TSUKAMOTO, Katsunori, K.K. Yaskawa Denki, Kitakyushu-shi, Fukuoka 806 (JP)
(74) Representative: Müller-Boré & Partner Patentanwälte
(86) International application number: JP9400907
(87) International publication number: WO9429084

(56) References cited:
- EP-A- 0 510 205
- FR-A- 2 555 493
- JP-A- 3 281 191
- JP-U-62 121 088
- US-A- 4 986 724
- US-E- R E32 794
- PATENT ABSTRACTS OF JAPAN vol. 11 no. 160 (M-592) ,23 May 1986 & JP-A-61 293656 (SHIN MEIWA IND CO) 24 December 1986,
- PATENT ABSTRACTS OF JAPAN vol. 12 no. 195 (M-705) ,7 June 1988 & JP-A-63 001851 (CHUGOKU KIKO) 6 January 1988,

## Description

### [Technical Field]

This invention relates to an industrial robot.

### [Background Art]

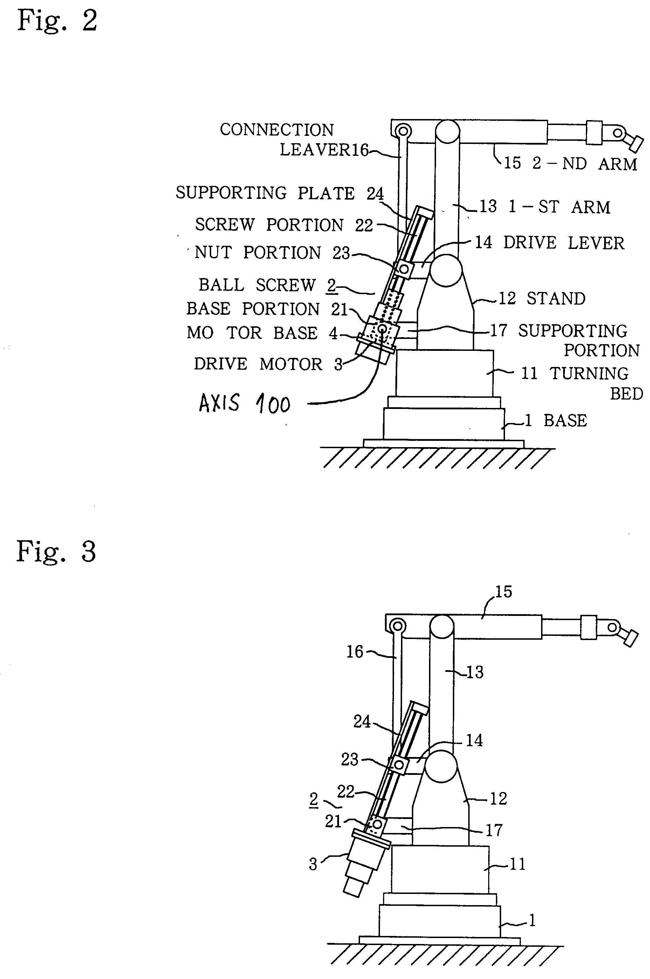

Hitherto, an industrial robot is adapted, as shown in FIG. 3, for example, so that turning bed 11 capable of turning is provided on base 1, a pair of stands 12 standing straight upwardly are provided on the turning bed 11, and one end of first arm 13 and one end of drive lever 14 are rotatably supported. The intermediate portion of second arm 15 is rotatably supported at the other end of first arm 13, one end of connection lever 16 is rotatably connected to one end of second arm 15, and the other end of connection lever 16 and the other end of drive lever 14 are rotatably connected. Thus, parallel crank mechanism is formed. Moreover, supporting portion 17 is provided at stand 12, and base portion 21 for rotatably supporting end portion of ball screw 2 is rotatably supported by the front end of supporting portion 17. Nut portion 23 meshing with screw portion 22 of ball screw 2 is rotatably connected to drive lever 14, and drive motor 3 for rotationally driving ball screw 2 is fixed at the end portion opposite to screw portion 22 of base portion 21 of ball screw 2. Screw side end portion of ball screw 2 is rotatably supported at the front end of supporting plate 24 extending in parallel from base portion 21 to screw portion 22.

However, in the prior art, base portion 21 of ball screw 2 is rotatably supported and center of gravity of drive motor 3 exists at position apart from rotation center axis of base portion 21. Since large weight of drive motor 3 is always applied to the center of gravity, natural frequency of ball screw drive system is lowered. In the case where drive motor 3 is rotated, resonance takes place in the lower frequency region to allow screw portion 22 of ball screw 2 to undergo displacement so that it is curved, thus disadvantageously lowering locus accuracy of the front end of second arm 15.

Moreover, there was also the problem that since drive motor 3 is disposed below from supporting portion 17, there occurs the necessity of allowing height of the entirety of robot to be high.

Further, there was also the problem that since drive motor 3 is fixed to the end portion of ball screw 2, in the case where friction heat produced at brake attached at drive motor 3 or nut portion of ball screw is cooled, cooling structure becomes complicated.

The closest prior art US-Re-32 794 discloses an industrial robot having the features of the preamble of claim 1.

The EP-A1-0 510 205 and the JP-A-63 001 851 disclose the principle of cooling a ball screw by a cooling gas in an open unsealed cooling system.

Finally the JP-A-61 293 656 discloses the use of a heat insulating member within an industrial robot, however, the provision of cooling means for cooling break means is not disclosed.

### [Disclosure of the Invention]

An object of this invention is to provide an industrial robot which allows resonant region of ball screw to be at the higher frequency side to improve locus accuracy of arm front end, and which is compact in the structure of robot body and is low in cost.

This invention is directed to an industrial robot according to claim 1. Moreover, there are provided a cooling hole penetrating in axial direction of the ball screw, a housing supported through a beraing at the end portion of the ball screw, a cooling groove for cooling brake means fixed at the housing, and communicating means for allowing the cooling hole and the cooling groove to communicate with each other.

For this reason, natural frequency of the ball screw drive system becomes higher, resulting in no possibility that there occurs the phenomenon that such natural frequency is resonant with frequency in the lower frequency region, which is produced in the case where the drive motor is rotated. Moreover, since there is no possibility that the drive motor is projected below from the supporting portion of the stand, it becomes unnecessary to allow height of the entirety of robot to be high.

Further, since there is provided cooling hole penetrating in axial driection within ball screw to cool the portion from the base portion side end portion to the screw side end portion, and to cool electromagnetic brake provided at the screw side end portion, it is possible to effectively cool, by simple cooling structure, friction heat produced at electromagnetic brake or nut portion of ball screw.

Accordingly, in accordance with this invention, resonance with frequency in the lower frequency region is prevented, locus accuracy of robot arm can be maintained to be high, and cooling structure for ball screw or electromagnetic brake can be simplified.

### [Brief Description of the Drawings]

FIGS. 1(a) and 1(b) are a side cross sectional view and a plan cross sectional view showing the essential part of an embodiment of this invention, respectively.

FIG. 2 is a side view showing the embodiment of this invention.

FIG. 3 is a side view showing prior art.

### [Best Mode for Carrying Out the Invention]

This invention will now be described in accordance with the embodiment shown in the figures.

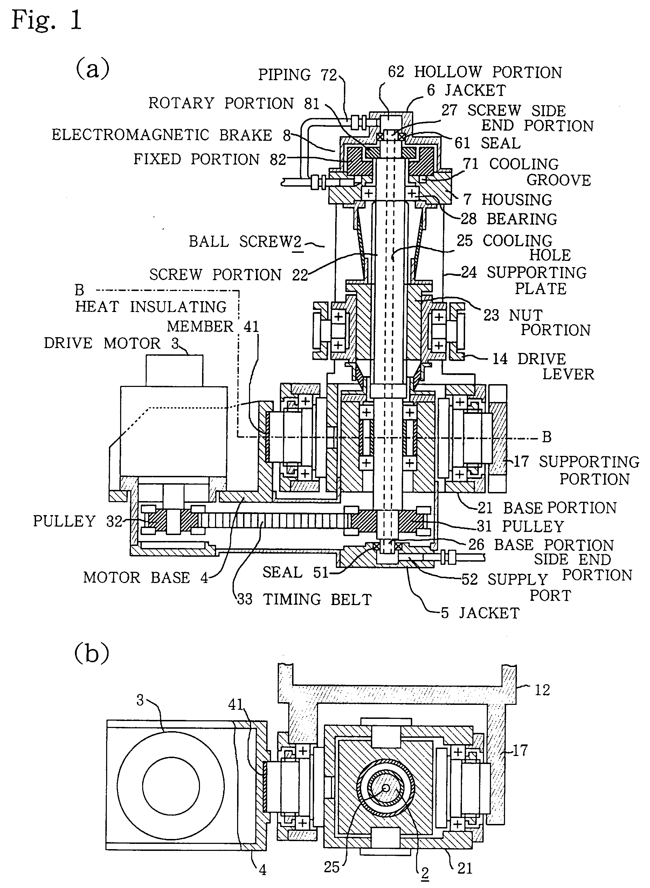

FIG. 1(a) is a side cross sectional view showing the essential part of the embodiment of this invention, FIG. 1(b) is a plan cross sectional view along B-B cross section, and FIG. 2 is a side view of this embodiment.

In the figures, turning bed 11 capable of turning is provided on base 1, stand 12 is provided on turning bed 11, one end of first arm 13 and one end of drive lever 14 are rotatably supported, the intermediate portion of second arm 15 is rotatably supported at one the other end of first arm 13, one end of connection lever 16 is rotatably connected to one end of second arm 15, and the other end of connection lever 16 and the other end of drive lever 14 are rotatably connected. Thus, parallel crank mechanism is formed. Supporting portion 17 is provided at stand 12, base portion 21 adapted for rotatably supporting the end portion of ball screw 2 is rotatably supported by the front end of supporting portion 17, and nut portion 23 meshing with screw portion 22 of ball screw 2 is rotatably connected to drive lever 14. Screw side end portion of ball screw 2 is rotatably supported at the front end of supporting plate 24 extending in parallel from base portion 21 to screw portion 22. The configuration mentioned above has a configuration substantially similar to that of the prior art.

This invention differs from the prior art in connected with the following points. Namely, motor base 4 is fixed to base portion 21 of ball screw 2, drive motor 3 for rotationally driving ball screw 2 is disposed at a position shifted in parallel to center axis of ball screw 2 through heat insulating member 41, and timing belt 33 is wrapped (wound) between pulley 31 provided at the end portion of ball screw 2 and pulley 32 provided at drive shaft of drive motor 3 to carry out transmission of torque from drive motor 3 to ball screw 2.

Moreover, cooling hole 25 penetrating in axial direction is provided at ball screw 2, and jacket 5 fitted through seal 51 is provided at base portion side end portion 26 of ball screw 2. Jacket 6 fitted through seal 61 is provided at screw side end portion 27, and cooling liquid delivered from supply port 52 provided at jacket 5 is caused to be passed through cooling hole 25 to deliver it into hollow (cavity) portion 62 of jacket 6.

Further, bearing 28 for supporting screw side end portion 27 of ball screw 2 and housing 7 for holding bearing 28 are provided at the front end of supporting plate 24. Rotary portion 81 of electromagnetic brake 8 is fixed to screw side end portion 27 of ball screw 2, and fixed portion 82 is fixed to housing 7. Cooling groove 71 for allowing cooling liquid to be passed therethrough is provided at the surface on which fixed portion 82 is attached of housing 7. Supply port and exhaust port are provided at cooling groove 71, and supply port, hollow portion 62 of jacket 6 and piping 72 are caused to communicate with each other to allow cooling liquid to be passed through cooling groove 71, thus to cool the electromagnetic brake 8.

Accordingly, since center of gravity of drive motor 3 is disposed in the vicinity of rotation center axis of the pivotal axis 100 which rotatably supports base portion 21 of ball screw 2, natural frequency of the ball screw drive system is caused to be high. Thus, there does not occur the phenomenon that natural frequency is resonant with frequency in the lower frequency region, which takes place in the case where drive motor 3 is rotated. Moreover, since there is no possibility that drive motor 3 is projected from supporting portion 17 to lower direction, it becomes unnecessary to allow height of the entirety of robot to be high.

Further, since cooling hole 25 penetrating in axial direction is provided within ball screw 2 to cool the portion from base portion side end portion 26 up to screw side end portion 27, and to cool electromagnetic brake 8 provided at screw side end portion 27, it is possible to effectively cool, by simple cooling structure, friction heat produced at electromagnetic brake 8 or nut portion 23 of ball screw.

Furthermore, since drive motor 3 is fixed to motor base 4 through heat insulating member 41, heat produced at drive motor 3 is difficult to be transmitted to ball screw 2, resulting in no possibility that bad influence is exterted on ball screw 2.

It should be noted that while, in the above-described embodiment, it has been described that nut portion meshing with screw portion of ball screw is connected to drive lever to drive second arm, also in the case where nut portion is directly connected to first arm, similar effects/advantages can be obtained.

In addition, while arm drive device using ball screw has been described in the above-described embodiment, arm drive device adapted for moving nut portion by any other linear movement device can provide similar effects and/or advantages.

### [Industrial Applicability]

This invention can be utilized, when applied to an industrial robot which can fluctuate arm, in the field for manufacturing and/or providing an arm drive device for an industrial robot which can prevent resonance with frequency in the lower frequency region to maintain locus accuracy of robot arm to be high, and can simplify cooling structure for ball screw or electromagnetic brake.

## Claims

1. An industrial robot which comprises a first arm (13) rotatably supported at a supporting body (17), a second arm (15) rotatably supported at the first arm (13), a ball screw (2) supported at the supporting body (17) by a base portion being pivotaly supported at the supporting body (17) by a pivotal axis (100) and adapted for rotatably supporting the end portion of a screw portion (22), a nut portion (23) pivotally connected to a member (14) for driving the first arm (13) or the second arm (15), and a drive motor (3) for rotationally driving the ball screw (2) via torque transmission means (31-33),
the axis of the drive motor (3) being offset from and parallel to the center axis of the ball screw, (2), characterized in that the center of gravity of the drive motor is disposed in the vicinity of the rotation center axis of the pivotal axis (100).

2. An industrial robot as set forth in claim 1, wherein there are provided a cooling hole (25) penetrating in an axial direction of the ball screw (2), a housing (7) supported through a bearing (28) at the end portion of the ball screw (2), a cooling groove (71) for cooling brake means (8) fixed at the housing (7), and communicating means (72) for allowing the cooling hole (25) and the cooling groove (71) to communicate with each other.

3. An industrial robot as set forth in claim 1 or 2, wherein a heat insulating member (41) is provided between the ball screw (2) and the drive motor (3).

## Patentansprüche

1. Industrieroboter mit einem ersten Arm (13), der an einem Haltekörper (17) drehbar gehaltert ist, einem zweiten Arm (15), der an dem ersten Arm (13) drehbar gehaltert ist, einer Kugelumlaufspindel (2), die am Haltekörper (17) von einem Basisabschnitt gehaltert ist der am Haltekörper (17) mittels einer schwenkbaren Achse (100) gehaltert ist und die zur drehbaren Halterung des Endabschnitts eines Schraubenabschnitts (22) angepaßt ist, einem Mutternabschnitt (23), der mit einem Glied (14) zum Antrieb des ersten Arms (13) oder des zweiten Arms (15) schwenkbar verbunden ist, und einem Antriebsmotor (3) zum drehbaren Antrieb der Kugelumlaufspindel (2) über Drehzahl-Übertragungsmittel (31-33), wobei die Achse des Antriebsmotors (3) bezüglich der Mittelachse der Kugelumlaufspindel (2) versetzt und parallel dazu angeordnet ist,
dadurch **gekennzeichnet,**
daß der Schwerpunkt des Antriebsmotors in der Nähe der Drehmittelachse der Schwenkachse (100) gelegen ist.

2. Industrieroboter nach Anspruch 1,
wobei vorgesehen sind: ein Kühlungsloch (25), das sich in Axialrichtung der Kugelumlaufspindel (2) hindurcherstreckt, ein Gehäuse (7), das über ein Lager (28) am Endabschnitt der Kugelumlaufspindel (2) gehaltert ist, eine Kühlungsnut (71) zum Kühlen von Bremsmitteln (8), die am Gehäuse (7) befestigt sind, und Verbindungsmittel (72), um zu ermöglichen, daß das Kühlungsloch (25) und die Kühlungsnut (71) miteinander in Verbindung stehen.

3. Industrieroboter nach Anspruch 1 oder 2,
wobei ein wärmeisolierendes Glied (41) zwischen der Kugelumlaufspindel (2) und dem Antriebsmotor (3) vorgesehen ist.

## Revendications

1. Robot industriel comprenant un premier bras (13) monté tournant sur un corps de support (17), un second bras (15) monté tournant sur le premier bras (13), une vis à billes (2) supportée sur le corps de support (17) par une partie de base montée pivotante sur le corps de support (17) à l'aide d'un axe de pivotement (100) et prévue pour supporter en rotation la partie d'extrémité d'une partie de vis (22), une partie d'écrou (23) raccordée, de façon pivotante, à un élément (14) pour entraîner le premier bras (13) ou le second bras (15), et un moteur d'entraînement (3) pour entraîner en rotation la vis à billes (2) par l'intermédiaire de moyens de transmission du couple (31 à 33), l'axe du moteur d'entraînement (3) étant décalé par rapport et parallèle à l'axe central de la vis à billes (2),
caractérisé en ce que le centre de gravité du moteur d'entraînement est placé au voisinage de l'axe central de rotation de l'axe de pivotement (100).

2. Robot industriel selon la revendication 1, dans lequel on prévoit un orifice de refroidissement (25) pénétrant selon une direction axiale de la vis à billes (2), un logement (7) supporté par l'intermédiaire d'un palier (28) sur la partie d'extrémité de la vis à billes (2), une rainure de refroidissement (71) pour refroidir un moyen de freinage (8) fixé sur le logement (7), et un moyen de communication (72) pour permettre une communication entre l'orifice de refroidissement (25) et la rainure de refroidissement (71).

3. Robot industriel selon la revendication 1 ou 2, dans lequel un élément d'isolation thermique (41) est prévu entre la vis à billes (2) et le moteur d'entraînement (3).
